# EUROPÄISCHE PATENTSCHRIFT

(11) **EP 1 404 987 B1**
(45) Veröffentlichungstag und Bekanntmachung des Hinweises auf die Patenterteilung: **09.08.2006**
(21) Anmeldenummer: 02754230.7
(22) Anmeldetag: 19.06.2002
(51) Int. Cl.: F16F 1/38

(54) **GUMMILAGER, VORZUGSWEISE STABILISATORLAGER, UND VERFAHREN ZUR MONTAGE DES LAGERS**
RUBBER BEARING, PREFERABLY A STABILIZING BEARING, AND METHOD FOR MOUNTING THIS BEARING
PALIER CAOUTCHOUTE, DE PREFERENCE PALIER DE STABILISATION ET PROCEDE POUR MONTER LEDIT PALIER

(30) Priorität: 06.07.2001 DE 10132379
(43) Veröffentlichungstag der Anmeldung: 07.04.2004
(73) Patentinhaber: ZF Lemförder Metallwaren AG, 49441 Lemförde (DE)
(72) Erfinder: KAMMEL, Helmut, 49401 Damme (DE); MICHELMANN, Raik, 49324 Melle (DE)
(86) Internationale Anmeldenummer: PCT/DE2002/002220
(87) Internationale Veröffentlichungsnummer: WO 2003/004901

(56) Entgegenhaltungen:
- EP-A- 0 227 869
- EP-A- 0 707 988
- EP-A- 0 911 195
- DE-A- 19 716 934
- US-A- 862 749
- US-A- 3 565 374

## Beschreibung

Die Erfindung betrifft ein Gummilager zur Lagerung zylindrischer Profilstäbe, vorzugsweise zur Lagerung von Stabilisatoren, sowie ein Verfahren zur Montage eines derartigen Lagers an einem Profilstab bzw. Stabilisator.

Gummilager werden für unterschiedlichste Einsatzzwecke zur elastischen Lagerung zylindrischer Profilstäbe vielfach eingesetzt. So werden beispielsweise die Stabilisatoren von Kraftfahrzeugen mittels entsprechender Gummilager gelagert. Zu diesem Zweck wird der Stabilisator von dem elastomeren Lagerkörper aufgenommen und mit diesem gemeinsam mittels einer den Lagerkörper umgebenden Schelle (oder Klammer bzw. Halterung) an anderen Bauteilen, beispielsweise am Hilfsrahmen eines Fahrzeugs befestigt. Nach dem Stand der Technik werden die Stabilisatoren entweder mit vormontierten und am Stabilisator vulkanisierten Lagern ausgeliefert oder die Montage der Lager erfolgt im Zuge der Befestigung des Stabilisators an den anderen Bauteilen unmittelbar beim Kunden. Ersteres bedingt hohe Fertigungskosten beim Lieferanten der Stabilisatoren, zumal die Montage der Lager am Stabilisator oft verhältnismäßig schwierig ist und einen hohen Montageaufwand erfordert. Zur Montage eines Lagers wird zunächst die Schelle (die Klammer) vom axialen Ende her auf den Stabilisator aufgeschoben. Anschließend wird in gleicher Weise mit dem Gummikörper des Lagers verfahren und dieser auf den Stabilisator bis zu der Stelle aufgeschoben, an welcher der Profilstab gelagert werden soll. Die häufig relativ komplizierte Stabilisatorgeometrie erschwert dabei das Verschieben des Gummis in axialer Richtung zumindest abschnittsweise erheblich. Nach dem Aufschieben des Elastomers, also des eigentlichen Lagerkörpers wird zu dessen Fixierung die Schelle über den Gummikörper geschoben, wobei verhindert werden muss, dass sich der Lagerkörper in axialer Richtung aus der vorgesehenen Position heraus verschiebt.

Bei der Vorortmontage im Zuge des Einbaus der Stabilisatoren wird um den zuvor auf den Stabilisator aufgeschobenen Gummikörper eine auf einer Seite offene Schelle herumgelegt. Beim Befestigen des Stabilisators mit dem aufgeschobenen Gummilager an beispielsweise dem Hilfsrahmen, welches mittels Schrauben erfolgt, muss dabei über die Schrauben die Vorspannung für das Elastomer aufgebracht werden. Diese Variante erweist sich insoweit, abgesehen von den bereits angesprochenen Schwierigkeiten beim Aufschieben des elastomeren Lagerkörpers, als wenig kundenfreundlich.

Eine derartige Anordnung offenbart die EP-A-0 911 195 mit einem Gummilager mit einem elastomeren Lagerkörper zur Aufnahme eines zylindrischen Profilstabes und einer der gemeinsamen Befestigung von Lager und Profilteil an anderen Bauteilen dienenden Schelle bzw. Klammer. Der elastomere Lagerkörper und die Klammer bilden hierzu eine bauliche Einheit aus, welchen einen Öffnungsspalt aufweist. Der Profilstab wird zur Montage bei geöffnetem Öffnungsspalt in das Gummilager in dessen axiale Aufnahmeöffnung eingeführt. Im Zuge der Montage wird durch Verschlussmittel der Öffnungsspalt geschlossen und eine Vorspannung des Elastomers erzeugt, indem sich die Klammer bzw. ein Klammerbauteil an einem anderen Bauteil abstützt. Die Verschlussmittel wirken hierzu mit dem anderen Bauteil zusammen.

Aufgabe der Erfindung ist es, ein Lager der genannten Art so auszubilden, dass dessen Montage an einem Profilsstab bzw. Stabilisator sich gegenüber dem Stand der Technik vereinfacht. Weiterhin besteht die Aufgabe darin, ein Verfahren zur Montage eines entsprechend gestalteten Lagers anzugeben.

Die Aufgabe wird durch ein Gummilager mit den Merkmalen des Hauptanspruchs gelöst. Ein Verfahren zur Montage eines nach der Erfindung ausgebildeten Lagers wird durch den Anspruch 13 charakterisiert.

Das erfindungsgemäße Gummilager (nachfolgend auch als "Lager" bezeichnet) besteht in an sich bekannter Weise aus einem elastomeren Lagerkörper zur Aufnahme eines im Wesentlichen zylindrischen Profilstabes bzw. Stabilisators (im weiteren Stabilisator) sowie einer Schelle (Klammer), welche der gemeinsamen Befestigung des Lagers und des Stabilisators an anderen Bauteilen (beispielsweise an einem Hilfsrahmen) dient. Erfindungsgemäß bilden jedoch der Lagerkörper und die Klammer, abweichend vom Stand der Technik, bereits vor der Montage am Stabilisator eine bauliche Einheit. Dabei weisen sowohl der elastomere Lagerkörper als auch die diesen aufnehmende Klammer einen sich axial erstreckenden Öffnungsspalt auf. Der Öffnungsspalt ist so ausgebildet, dass der Stabilisator durch den Öffnungsspalt hindurch in das Lager gedrückt, also das Lager auf den Stabilisator aufgeklemmt werden kann. Die auf den Stabilisator aufgeklemmte Baueinheit ist nach dem Schließen des Öffnungsspaltes über an den axialen Enden der Klammer angeordnete Verschlussmittel am Profilstab unter Vorspannung des Elastomers fixierbar.

Entsprechend einer möglichen Ausbildung des erfindungsgemäßen Gummilagers sind die Verschlussmittel in Form von Laschen ausgebildet, die an den axialen Enden zweier sich auf dem Umfang einer geschlossenen Klammer einander gegenüberliegender, radial nach außen erstreckender Flügel angeordnet sind. Die Flügel bestehen dabei jeweils aus zwei Flächenelementen, die bei geschlossenem Öffnungsspalt des am Profilstab montierten Lagers aneinander liegen. Zur Fixierung des Lagers umgreifen die an jeweils einem der Flächenelemente eines Flügels angeordneten und doppelt abgewinkelten Laschen das jeweils andere Flächenelement des entsprechenden Flügels und halten so den zwischen den Flächenelementen eines der Flügel ausgebildeten Öffnungsspalt geschlossen. Die Verschlussmittel sind, in Form der Laschen, bei dieser Art der Ausbildung des Lagers ein unmittelbarer Teil der Klammer, grundsätzlich ist es aber auch möglich, den Öffnungsspalt durch Vernieten oder Verschweißen im Bereich der Flügel der Klammer geschlossen zu halten. Zur Befestigung des Lagers an anderen Baugruppen weisen die Flügel Durchbrüche, vorzugsweise zum Hindurchführen einer Schraube auf.

Vor der Fixierung des Lagers durch die Verschlussmittel weist der Öffnungsspalt, einen Öffnungswinkel zwischen 50° und 70° auf, wobei der Scheitel des Öffnungswinkels auf der Lagerachse liegt. Vorzugsweise beträgt der Öffnungswinkel etwa 60°.

Das erfindungsgemäße Lager ermöglicht eine einfache und daher kostensparende Montage am Stabilisator. Der Kunde erhält den Stabilisator mit vormontierten Gummilagern und muss beim Einbau des Stabilisators nunmehr lediglich die gesamte Einheit aus Stabilisator und Lagern mittels an den Schellen der Lager vorgesehener Bohrungen und Schrauben befestigen. Auf die Fixierung des elastomeren Gummikörpers am Stabilisator muss er nicht mehr achten. Insbesondere muss die zur Fixierung erforderliche Vorspannung des Elastomers nicht mehr über die der Befestigung der gesamten Anordnung dienende Verschraubung aufgebracht werden. Beim Lieferanten der Stabilisatoren ermöglicht die Ausgestaltung des Lagers als bauliche Einheit mit dem axialen Öffnungsspalt auch bei komplizierten Stabilisatorgeometrien eine einfache Montage am Stabilisator, wodurch die Montagekosten sich deutlich verringern.

Gemäß praxisgerechter Ausgestaltungen weist die vorzugsweise aus einem metallischen Material geringer Stärke ausgebildete Klammer Verstärkungen auf. So können beispielsweise an den gegebenenfalls vorhandenen Flügeln im Bereich des Öffnungsspaltes in der Nähe der Verschlussmittel radial sich nach außen erstreckende Ohren ausgebildet sein und/oder die Klammer kann auf ihrer Außenfläche zumindest auf dem den Lagerkörper umgebenden Umfang eine Verrippung aufweisen, wobei sich die Rippen vorzugsweise in axialer Richtung erstrecken.

Zur Unterstützung der Montage sind bei einer vorteilhaften Ausgestaltungsform des erfindungsgemäßen Gummilagers auf der Außenfläche des elastomeren Lagerkörpers eine oder mehrere in komplementäre Einwölbungen der Innenflächen der Klammer eingreifende Erhöhungen ausgebildet.

Die Schelle bzw. die Klammer kann einstückig ausgebildet sein oder aus zwei den Lagerkörper auf seinem Umfang jeweils etwa halbkreisförmig umgreifenden Teilen bestehen, welche jedoch vor dem Einfügen des Lagerkörpers an der dem Öffnungsspalt gegenüberliegenden Seite miteinander verbunden werden. Je nach dem Einsatzzweck des Lagers und dem gewünschten Kennungsverhalten, kann unter Beibehaltung des grundsätzlichen Aufbaus zwischen dem Lagerkörper und der Klammer zusätzlich eine Kunststoffschale eingeordnet sein. Um den Lagerkörper und gegebenenfalls die Kunststoffschale axial in der Klammer zu fixieren, ist bei einer Ausgestaltung der Erfindung an den axialen Enden der Klammer jeweils ein abschnittsweise oder auf dem gesamten den Lagerkörper umgebenden Umfang verlaufender Ringbund ausgebildet.

Ein Verfahren zur Montage eines nach der Erfindung ausgebildeten Lagers gestaltet sich wie folgt. Sofern die Schelle aus zwei Teilen besteht, werden zunächst die beiden Teile zumindest teilweise zusammengefügt. Anschließend wird der elastomere Lagerkörper in die vorzugsweise mit einem Öffnungswinkel des Öffnungsspaltes von 60° ausgebildete Klammer eingebracht. Die in dieser Weise gebildete bauliche Einheit wird auf den Stabilisator aufgeklemmt. Dies geschieht indem der Profilstab durch den Öffnungsspalt in die Baueinheit eingedrückt wird, so dass es nicht erforderlich ist, das Lager auf dem Stabilisator beginnend an den Enden des Profilstabes axial aufzuschieben. Der Öffnungsspalt ermöglicht es, das Lager unmittelbar an der vorgesehenen Stelle auf dem Profilstab aufzuklemmen. Danach wird der Öffnungsspalt geschlossen und gleichzeitig der Lagerkörper mittels an der Schelle ausgebildeter Verschlussmittel vorgespannt sowie am Profilstab fixiert, wobei hierzu an den radial sich nach außen erstreckenden Flächenelementen der Klammer angeordnete Laschen doppelt abgekantet werden, so dass sie die mit ihnen gemeinsam die bereits erwähnten Flügel zur Befestigung des Lagers ausbildenden Flächenelemente klemmenartig umgreifen. Der Öffnungsspalt wird so geschlossen gehalten. Im Zuge der Montage verkleinert sich beim Schließen des Öffnungsspaltes entsprechend einer besonders vorteilhaften Ausgestaltung des erfindungsgemäßen Lagers bzw. der Klammer der Außendurchmesser der Klammer, so dass sich eine sehr gleichmäßige Spannungsverteilung im Elastomer über dessen gesamten Umfang ergibt. Ohne dass die Gefahr eines Verrutschens des Lagerkörpers besteht, kann nun der Stabilisator zusammen mit dem Lager, beispielsweise an einem Hilfsrahmen, montiert werden.

Der elastomere Lagerkörper kann mit der Klammer vor dem Aufschieben auf den Stabilisator durch einen Vulkanisationsvorgang verbunden werden. Grundsätzlich ist es aber ausreichend, den Lagerkörper ohne Fixierung in die Klammer einzulegen. Gegebenenfalls kann die aus der Klammer und dem Lagerkörper gebildete Baueinheit auf dem Stabilisator durch eine Klebeverbindung zusätzlich befestigt werden. Sofern der Lagerkörper mit der Klammer nicht durch Vulkanisation verbunden wird, kann die Klammer bereits vor der Montage mit einem Oberflächenschutz versehen werden.

Anderenfalls erfolgt das Aufbringen des Oberflächenschutzes vorzugsweise nach dem Vulkanisationsvorgang.

Die Erfindung soll anhand eines Ausführungsbeispieles näher erläutert werden. In der zugehörigen Zeichnung zeigen.
- Figur 1:: Das erfindungsgemäße Gummilager vor der Montage am Profilstab;
- Figur 2:: Das Lager nach Figur 1 in einer Darstellung mit einem radial geführten Schnitt;
- Figur 3:: Das auf den Stabilisator montierte Gummilager nach Figur 1;
- Figur 4:: Das montierte Lager nach Figur 3 mit Blick auf die Flügel;
- Figur 5:: Das Lager nach Figur 4 mit einem Schnitt entlang der Linie B-B;
- Figur 6:: Die Ausbildung des Lagers mit einer zwischen Lagerkörper und Klammer eingeordneten Kunststoffschale und einem axial angeordneten Ringbund;
- Figur 7:: Das Lager nach Figur 6 in einem axialen Schnitt;

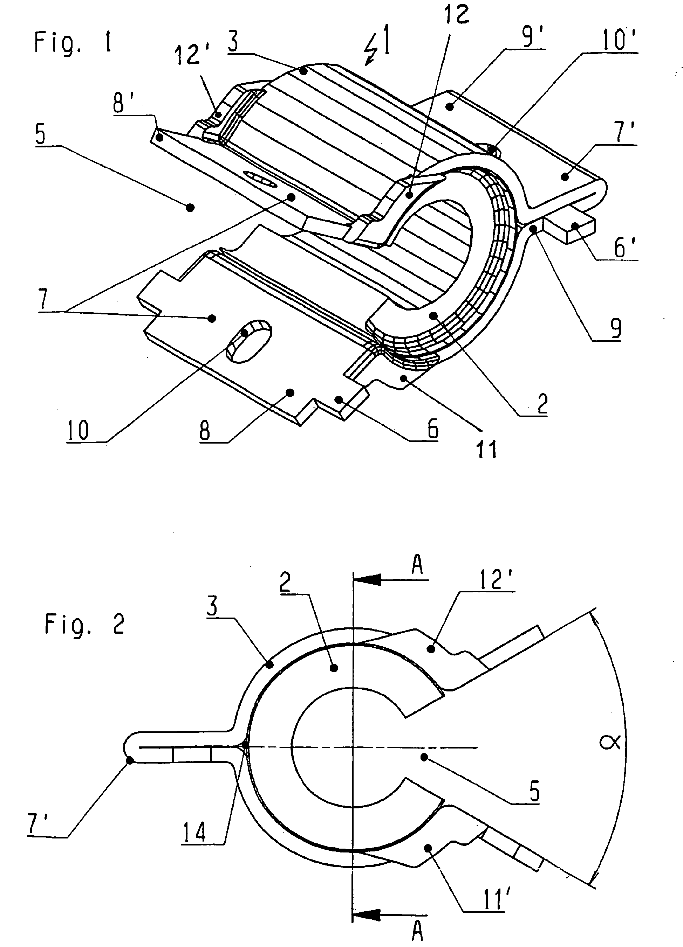

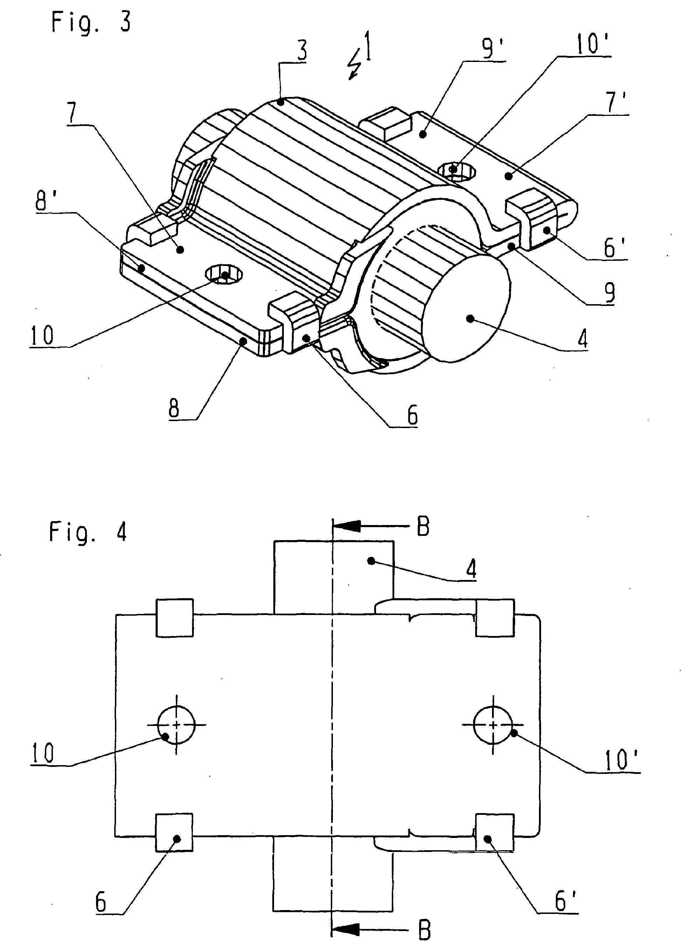

In der Figur 1 ist das erfindungsgemäße Lager 1 dargestellt. Das Lager 1 besteht aus dem elastomeren Lagerkörper 2 und der diesen Lagerkörper 2 umgebenden Schelle 3 (Klammer), welche eine bauliche Einheit bilden. Gemäß dem Beispiel ist die Klammer 3 einstückig ausgebildet. Sowohl die Klammer 3 als auch der aus Gummi bestehende Lagerkörper 2 weisen einen sich axial erstreckenden Öffnungsspalt 5 auf. An den axialen Enden der Klammer 3 sind an den Flächenelementen 8, 9 Laschen 6, 6' ausgebildet, welche später als Verschlussmittel dienen. Die Flächenelemente 8, 8', 9, 9' weisen Bohrungen 10, 10' auf, über die eine Verschraubung der gesamten Anordnung einschließlich eines von dem Lager 1 aufgenommenen Stabilisators 4 (siehe Figur 3) mit anderen Bauteilen ermöglicht ist. In der Praxis wird zumindest eine der nach dem Schließen des Öffnungsspaltes 5 gemeinsam den Durchbruch 10 ausbildenden Bohrungen, anders als in der Zeichnung dargestellt, aus Toleranzgründen besser als Langloch ausgeführt sein.

Durch die Figur 2, welche das Lager 1 nach Figur 1 in einem radial verlaufenden Schnitt darstellt, wird die Ausbildung des Lagers 1 nochmals verdeutlicht. Als Montagehilfe weist der elastomere Lagerkörper eine Erhöhung 14 auf, die nach dem Einlegen in die Klammer in eine korrespondierende Einwölbung der Innenfläche der Klammer 3 eingreift. Der axial verlaufende Öffnungsspalt 5 hat vorzugsweise einen Öffnungswinkel α von 60°. Er ist damit so gestaltet, dass er das Aufklemmen des Lagers 1 auf den Stabilisator 4 ermöglicht. Nach dem Aufklemmen werden der Öffnungsspalt 5 geschlossen und die an den Flächenelementen 8, 9 der Klammer 3 ausgebildeten Laschen 6, 6' zweifach abgewinkelt. Hierdurch umgreifen die als Verschlussmittel wirkenden Laschen 6, 6' die Flächenelemente 8', 9', so dass der Öffnungsspalt 5 geschlossen bleibt und die Flächenelemente 8, 8' bzw. 9, 9' jeweils einen gemeinsamen sich radial nach außen erstreckenden Flügel (7, 7') ausbilden. Dieses wird durch die Figur 3 veranschaulicht. Beim Schließen des Öffnungsspaltes 5 des zuvor auf den Stabilisator 4 geschobenen Lagers 1 wird der Außendurchmessers der Klammer 3 verringert. Hierdurch wird der elastomere Gummikörper 2 vorgespannt, wobei sich eine gleichmäßige Spannungsverteilung über den gesamten Umfang des Bauteils einstellt. Mittels durch die Bohrungen 10, 10' der Flügel 7, 7' zu führender Schrauben können das Lager 1 und der in ihm gelagerte Stabilisator 4 an anderen Bauteilen, beispielsweise am Hilfsrahmen eines Fahrzeugs befestigt werden.

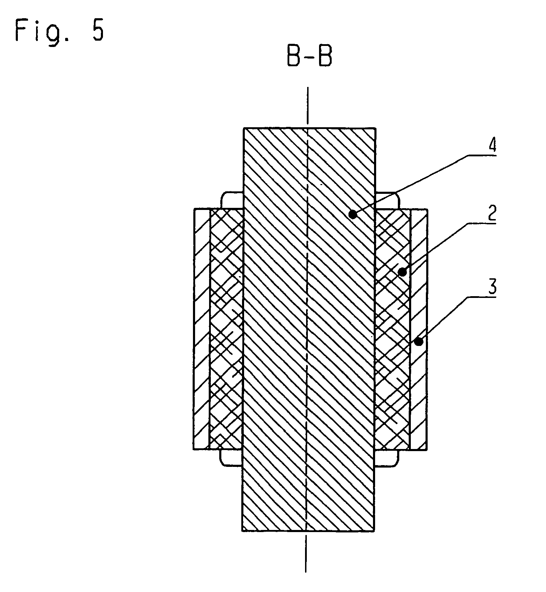

In der Figur 4 ist das gemäß Figur 3 auf den Stabilisator 4 aufmontierte Lager 1 nochmals mit Blick auf die Flügel 7,7' dargestellt. Deutlich zu erkennen ist wie die Verschlussmittel 6, 6' jeweils eines der die Flügel 7,7' ausbildenden Flächenelemente 8, 8', 9, 9' umgreifen. Radial außen angeordnet sind die Bohrungen 10, 10' vorgesehen, mittels welcher die gesamte Anordnung an anderen Bauteilen befestigt werden kann. Die Verhältnisse sind in der Figur 5 nochmals in einer Schnittdarstellung mit einem entlang der Linie B-B verlaufenden Schnitt dargestellt.

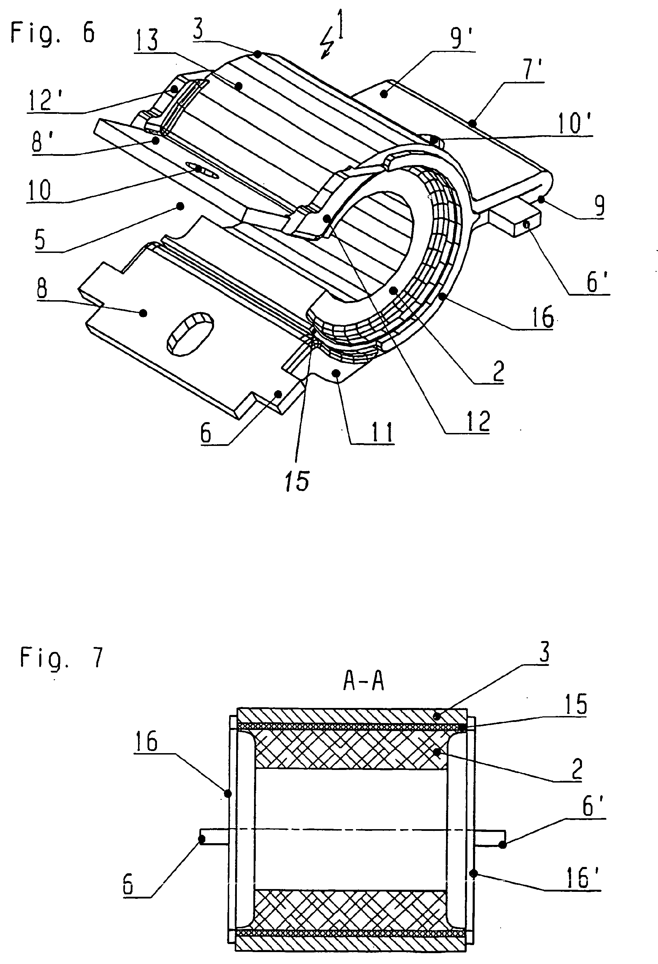

Die Figur 6 betrifft eine Ausführungsforrn des Lagers 1, bei der an den axialen Enden der Klammer 3 ein sich zumindest über Teile des Umfangs erstreckender Bundring 16, 16' ausgebildet ist. Diese Ausbildungsform ist besonders dann vorteilhaft, wenn auf eine Vulkanisation von Lagerkörper 2 und Klammer 3 verzichtet wird, weil zum Beispiel wie bei der Ausführung nach der Figur 6, zusätzlich zwischen dem elastomeren Lagerkörper 2 und der Klammer 3 eine Kunststoffschale 15 eingeordnet ist. Durch den Bundring 16, 16' wird verhindert, dass der Gummikörper 2 (bzw. der Gummikörper 2 und die ihn umgebende Kunststoffschale 15) beim Aufschieben der Baueinheit auf den Profilstab 4 innerhalb der Klammer 3 verrutscht. Ebenso wie beim Lager 1 nach Figur 1 weist die Klammer 3 auf ihrem Außenumfang zur Erhöhung der mechanischen Stabilität eine Verrippung auf, deren Rippen 13 in axialer Richtung verlaufen. Der Aufbau des Lagers 1 nach der Figur 6 wird durch der Darstellung nach der Figur 7, welche die Anordnung in einem Axialschnitt zeigt, nochmals verdeutlicht. Gut zu erkennen sind die Bundringe 16, 16' an den axialen Enden der Klammer 3 sowie die vor dem Schließen des Öffnungsspaltes 5 und der Fixierung des Lagers 1 auf dem Stabilisator 4 noch axial nach außen weisenden Laschen 6, 6'. Ebenfalls deutlich zu erkennen ist die den Gummikörper 2 umgebende Kunststoffschale 15. Da durch das Einfügen der Kunststoffschale 15 eine Vulkanisierung zum Verbinden des Elastomers mit der Klammer 3 nicht möglich ist, stellen die Bundringe 16, 16' eine wirksame Maßnahme dar, um ein axiales Verrutschen der Komponenten der Baueinheit beim Aufklemmen auf den Stabilisator zu verhindern.

### Liste der verwendeten Bezugszeichen

- 1: Lager, Gummilager
- 2: Lagerkörper, Gummikörper
- 3: Schelle, Klammer
- 4: Profilstab, Stabilisator
- 5: Öffnungsspalt
- 6, 6': Verschlussmittel, Lasche
- 7, 7': Flügel
- 8, 8': Flächenelement
- 9, 9': Flächenelement
- 10, 10': Durchbruch, Bohrung
- 11, 11': Ohr
- 12, 12': Ohr
- 13: Rippen
- 14: Erhöhung
- 15: Kunststoffschale
- 16, 16': Ringbund

## Patentansprüche

1. Gummilager (1) mit einem elastomeren Lagerkörper (2) zur Aufnahme eines zylindrischen Profilstabes (4), vorzugsweise eines Stabilisators, und einer der gemeinsamen Befestigung von Lager (1) und Profilstab (4) an anderen Bauteilen dienenden Klammer (3), welche eine bauliche Einheit ausbilden, die einen sich axial erstreckenden, vor der Montage am Profilstab (4) geöffneten Öffnungsspalt (5) aufweist, welcher ein Aufklemmen des Lagers (1) auf den Profilstab (4) ermöglicht indem der Profilstab (4) durch den Öffnungsspalt (5) hindurchdrückbar ist, und nach dem Aufklemmen auf den Profilstab (4) unter Schließung des Öffnungsspaltes (5) sowie Vorspannung des Elastomers durch an der Klammer (3) auf einer Seite des Öffnungsspaltes (5) angeordnete und mit der gegenüberliegenden Seite des Öffnungsspalt (5) der Klammer (3) zusammenwirkende Verschlussmittel (6, 6') am Profilstab (4) fixierbar ist.

2. Gummilager nach Anspruch 1,
**dadurch gekennzeichnet, dass** die Verschlussmittel (6, 6') in Form von Laschen als Teil der Klammer (3) ausgebildet und an den axialen Enden zweier sich auf dem Umfang der Klammer (3) einander gegenüberliegender, radial nach außen erstreckender Flügel (7 , 7') angeordnet sind, welche jeweils aus zwei, bei geschlossenem Öffnungsspalt (5) des am Profilstab (4) montierten Lagers (1) aneinander liegenden Flächenelementen (8, 8', 9, 9') bestehen, wobei die an jeweils einem dieser Flächenelemente (8, 9) angeordneten Laschen (6, 6') doppelt abgewinkelt sind, so dass sie, das jeweils andere Flächenelement (8', 9') umgreifend, das Elastomer unter Vorspannung und den zwischen den Flächenelementen (8, 8') eines der Flügel (7) ausgebildeten Öffnungsspalt (5) geschlossen halten, und wobei die Flügel (7 , 7') Durchbrüche (10, 10') zur Befestigung des Lagers an anderen Baugruppen aufweisen.

3. Gummilager nach Anspruch 1 oder 2,
**dadurch gekennzeichnet, dass** sich der Außendurchmesser der Klammer (3) beim Schließen des Öffnungsspaltes (5) verkleinert.

4. Gummilager nach einem der Ansprüche 1 bis 3,
**dadurch gekennzeichnet, dass** der Öffnungswinkel (α) des Öffnungsspaltes (5), dessen Scheitel auf der Lagerachse liegt, vor der Montage des Lagers 50° bis 70° beträgt.

5. Gummilager nach Anspruch 4,
**dadurch gekennzeichnet, dass** der Öffnungswinkel (α) des Öffnungsspaltes (5) vor der Montage des Lagers etwa 60° beträgt.

6. Gummilager nach einem Ansprüche 2 bis 4,
**dadurch gekennzeichnet, dass** zur Verstärkung der Klammer (3) an den axialen Enden des Flügels (7), zwischen dessen Flächenelementen (8, 8') der Öffnungsspalt (5) verläuft, im Bereich des Übergangs seines den Lagerkörper (2) umgebenden Umfangs zu den Flächenelementen (8, 8') Ohren (11, 11', 12, 12') ausgebildet sind.

7. Gummilager nach Anspruch 1 oder 6,
**dadurch gekennzeichnet, dass** die Klammer (3) im Bereich seines den elastomeren Lagerkörper (2) umgebenden Umfangs auf der Außenfläche eine Verrippung aufweist.

8. Gummilager nach Anspruch 7,
**dadurch gekennzeichnet, dass** die Rippen (13) in axialer Richtung verlaufen.

9. Gummilager nach einem der Ansprüche 1 bis 8,
**dadurch gekennzeichnet, dass** der elastomere Lagerkörper (2) auf seiner Außenfläche eine oder mehrere in komplementäre Einwölbungen der Innenflächen der Klammer (3) eingreifende Erhöhungen (14) aufweist.

10. Gummilager nach einem der Ansprüche 1 bis 9,
**dadurch gekennzeichnet, dass** die Klammer (3) einstückig ausgebildet ist.

11. Gummilager nach einem der Ansprüche 1 bis 10,
**dadurch gekennzeichnet, dass** zwischen dem Lagerkörper (2) und der Klammer (3) eine Kunststoffschale (15) eingeordnet ist.

12. Gummilager nach einem der Ansprüche 1 bis 11,
**dadurch gekennzeichnet, dass** an den axialen Stirnseiten der Klammer (3) jeweils ein Ringbund (16,16') ausgebildet ist, der sich abschnittsweise oder auf dem gesamten den Lagerkörper (2) umgebenden Umfangsbereich der Klammer (3) erstreckt.

13. Verfahren zur Montage eines Gummilagers (1) auf einem Profilstab (4), vorzugsweise einem Stabilisator, bei dem
a) ein elastomer Lagerkörper (2) in eine der späteren Befestigung des Lagers (1) und des Profilstabes (4) dienende Klammer (3) eingebracht wird,
b) der Lagerkörper (2) gemeinsam mit der ihn umgebenden Klammer (3) über einen sich axial durch den Lagerkörper (2) und die Klammer (3) erstreckenden Öffnungsspalt (5) auf den Profilstab (4) aufgeklemmt wird,
c) der Öffnungsspalt (5) geschlossen wird,
d) an radial sich nach außen erstreckenden Flächenelementen (8, 9) der Klammer (3) angeordnete Laschen (6, 6') doppelt abgekantet werden, so dass sie weitere an den Flächenelementen (8, 9) anliegende Flächenelemente (8', 9') klemmenartig umgreifen und dadurch den Öffnungsspalt (5) geschlossen halten sowie das Lager (1) unter Vorspannung des Elastomers auf dem Profilstab (4) fixieren.

14. Verfahren nach Anspruch 13,
**dadurch gekennzeichnet, dass** die Klammer (3) vor dem Einlegen des Lagerkörpers (2) mit einem Oberflächenschutz versehen wird.

15. Verfahren nach Anspruch 13 oder 14,
**dadurch gekennzeichnet, dass** der Lagerkörper (2) gemeinsam mit einer ihn umgebenden Kunststoffschale (15) in die Klammer (3) eingelegt wird.

16. Verfahren nach Anspruch 13,
**dadurch gekennzeichnet, dass** der elastomere Lagerkörper (2) und die Klammer (3) vor dem Aufklemmen auf den Profilstab (4) durch Vulkanisation miteinanderverbunden und die Klammer (3) vorzugsweise danach mit einem Oberflächenschutz versehen wird.

17. Verfahren nach einem der Ansprüche 13 bis 16,
**dadurch gekennzeichnet, dass** der Lagerkörper (2) nach bzw. beim Aufklemmen auf den Profilstab (4) mittels Kleber an diesem fixiert wird.

## Claims

1. Rubber bearing (1) having an elastomeric bearing body (2) for receiving a cylindrical profiled bar (4), preferably a stabiliser, and a clasp (3) which serves to fasten the bearing (1) and the profiled bar (4) jointly to other components, which bearing body and clasp form a structural unit which has an axially extending opening gap (5) which is open prior to the fitting of said unit to the profiled bar (4) and permits squeezing of the bearing (1) onto the profiled bar (4) through the fact that said profiled bar (4) can be pressed through the opening gap (5), and which structural unit can be fixed in position on the profiled bar (4), after being squeezed onto the latter, with closure of the opening gap (5) and pretensioning of the elastomer by means of locking means (6, 6') which are disposed on the clasp (3) on one side of the opening gap (5) and interact with the opposite side of said opening gap (5) in the clasp (3).

2. Rubber bearing according to Claim 1,
**characterised in that** the locking means (6, 6') are constructed in the form of tongues as part of the clasp (3) and are disposed on the axial ends of two fins (7, 7') which lie opposite one another on the periphery of said clasp (3) and extend radially outwards and which each consist of two surface elements (8, 8', 9, 9') which lie against one another when the opening gap (5) of the bearing (1) fitted to the profiled bar (4) is closed, the tongues (6, 6'), which are disposed on one of the said surface elements (8, 9) in each case, being angled twice, so that, engaging round the other surface element (8', 9') in each case, they keep the elastomer under pretensioning and keep the opening gap (5) constructed between the surface elements (8, 8') of one of the fins (7) closed, and said fins (7, 7') having openings (10, 10') for fastening the bearing to other assemblies.

3. Rubber bearing according to Claim 1 or 2,
**characterised in that** the outer diameter of the clasp (3) is reduced when the opening gap (5) is closed.

4. Rubber bearing according to one of Claims 1 to 3,
**characterised in that** the angle of opening (α) of the opening gap (5), the apex of which angle lies on the axis of the bearing, is 50° to 70° before the bearing is fitted.

5. Rubber bearing according to Claim 4,
**characterised in that** the angle of opening (α) of the opening gap (5) is about 60° before the bearing is fitted.

6. Rubber bearing according to one of Claims 2 to 4,
**characterised in that**, for the purpose of reinforcing the clasp (3), lugs (11, 11', 12, 12') are constructed at the axial ends of the fin (7), between whose surface elements (8, 8') the opening gap (5) extends, in the region of the transition from its periphery which surrounds the bearing body (2) to said surface elements (8, 8').

7. Rubber bearing according to Claim 1 or 6,
**characterised in that** the clasp (3) has a rib system on the outer face in the region of the periphery of said bearing that surrounds the elastomeric bearing body (2).

8. Rubber bearing according to Claim 7,
**characterised in that** the ribs (13) extend in the axial direction.

9. Rubber bearing according to one of Claims 1 to 8,
**characterised in that** the elastomeric bearing body (2) has, on its outer face, one or more elevations (14) which engage in complementary inwardly arched portions in the inner faces of the clasp (3).

10. Rubber bearing according to one of Claims 1 to 9,
**characterised in that** the clasp (3) is of one-piece construction.

11. Rubber bearing according to one of Claims 1 to 10,
**characterised in that** a plastic shell (15) is disposed in between the bearing body (2) and the clasp (3).

12. Rubber bearing according to one of Claims 1 to 11,
**characterised in that** there is constructed, on each of the axial end faces of the clasp (3), an annular collar (16, 16') which extends over certain sections or over that entire peripheral region of the clasp (3) which surrounds the bearing body (2).

13. Method of fitting a rubber bearing (1) onto a profiled bar (4), preferably a stabiliser, in which:
a) an elastomeric bearing body (2) is installed in a clasp (3) which serves for the subsequent fastening of the bearing (1) and the profiled bar (4);
b) the bearing body (2) is squeezed, together with the clasp (3) that surrounds it, onto the profiled bar (4) via an opening gap (5) which extends axially through said bearing body (2) and said clasp (3);
c) the opening gap (5) is closed;
d) tongues (6, 6') disposed on surface elements (8, 9) of the clasp (3) which extend radially outwards are folded over twice, so that they engage, after the fashion of a clip, round other surface elements (8', 9') that rest against the surface elements (8, 9), and said tongues thereby keep the opening gap (5) closed and also fix the bearing (1) in position on the profiled bar (4) while pretensioning the elastomer.

14. Method according to Claim 13,
**characterised in that** the clasp (3) is provided with surface protection before the placing-in of the bearing body (2).

15. Method according to Claim 13 or 14,
**characterised in that** the bearing body (2) is placed, together with a plastic shell (15) which surrounds it, in the clasp (3).

16. Method according to Claim 13,
**characterised in that** the elastomeric bearing body (2) and the clasp (3) are connected to one another by vulcanisation before being squeezed onto the profiled bar (4), and said clasp (3) is preferably provided with surface protection after that.

17. Method according to one of Claims 13 to 16,
**characterised in that** the bearing body (2) is fixed in position on the profiled bar (4) by means of adhesive, after being, or on being, squeezed onto said profiled bar.

## Revendications

1. Palier élastomère (1) comprenant un corps de palier élastomère (2) destiné à recevoir une barre profilée cylindrique (4), de préférence une barre stabilisatrice, et une bride (3) assurant la fixation commune du palier (1) et de la barre profilée (4) sur d'autres composants, formant un ensemble de construction, qui présente une fente d'ouverture (5) s'étendant axialement, ouverte avant le montage de la barre stabilisatrice (4), cette fente permettant un emboîtement du palier (1) sur la barre profilée (4) en ce que la barre profilée (4) peut être emmanchée à travers la fente d'ouverture (5), et pouvant être fixé sur la barre profilée (4) après l'emboîtement sur la barre profilée (4) en refermant la fente d'ouverture (5) et en mettant sous précontrainte l'élastomère, grâce à des moyens de fermeture (6, 6') aménagés sur la bride (3), d'un côté de la fente d'ouverture (5), et coopérant avec le côté opposé de la fente d'ouverture (5) de la bride (3).

2. Palier élastomère selon la revendication 1, **caractérisé en ce que** les moyens de fermeture (6, 6') sont réalisés sous forme de languettes faisant partie de la bride (3) et sont disposés aux extrémités axiales de deux ailes (7, 7') opposées l'une à l'autre sur le pourtour de la bride (3), s'étendant radialement vers l'extérieur, ces ailes étant composées chacune de deux éléments plats (8, 8', 9, 9') placés l'un contre l'autre lorsque la fente d'ouverture (5) du palier (1) monté sur la barre profilée (4) est fermée, les languettes (6, 6') respectivement disposées sur l'un de ces éléments plats (8, 9) étant alors repliées deux fois, de manière qu'elles maintiennent l'élastomère sous précontrainte et maintiennent la fente d'ouverture (5), formée entre les éléments plats (8, 8') d'une aile (7), fermée en encerclant l'élément plat respectivement opposé (8', 9'), et les ailes (7, 7') comportant des découpes (10, 10') permettant la fixation du palier sur d'autres sous-ensembles.

3. Palier élastomère selon la revendication 1 ou 2, **caractérisé en ce que** le diamètre extérieur de la bride (3) se resserre lorsque la fente d'ouverture (5) est refermée.

4. Palier élastomère selon l'une des revendications 1 à 3, **caractérisé en ce que** l'angle d'ouverture (α) de la fente d'ouverture (5), dont le sommet coïncide avec l'axe du palier, est de l'ordre de 50° à 70° avant le montage.

5. Palier élastomère selon la revendication 4, **caractérisé en ce que** l'angle d'ouverture (α) de la fente d'ouverture (5) est de l'ordre de 60° avant le montage.

6. Palier élastomère selon l'une des revendications 2 à 4, **caractérisé en ce que**, pour renforcer la bride (3), des joues (11, 11', 12, 12') sont aménagées aux extrémités axiales de l'aile (7), entre les éléments plats (8, 8') de laquelle s'étend la fente d'ouverture (5), notamment dans la partie de transition entre la partie circonférentielle de la bride, qui entoure le corps de palier (2), et les éléments plats (8, 8').

7. Palier élastomère selon l'une des revendications 1 ou 6, **caractérisé en ce que** la bride (3) comporte, à sa surface extérieure, un nervurage au niveau de la partie de la bride, qui entoure le corps de palier (2).

8. Palier élastomère selon la revendication 7, **caractérisé en ce que** les nervures (13) s'étendent dans le sens axial.

9. Palier élastomère selon l'une des revendications 1 à 8, **caractérisé en ce que** le corps de palier élastomère (2) comporte, à sa surface extérieure, un ou plusieurs bossage(s) (14) s'engageant dans un ou plusieurs évidement(s) complémentaire(s) ménagé(s) dans la face intérieure de la bride (3).

10. Palier élastomère selon l'une des revendications 1 à 9, **caractérisé en ce que** la bride (3) est formée d'une seule pièce.

11. Palier élastomère selon l'une des revendications 1 à 10, **caractérisé en ce qu'**une coquille en matière plastique (15) est intercalée entre le corps de palier (2) et la bride (3).

12. Palier élastomère selon l'une des revendications 1 à 11, **caractérisé en ce qu'**une collerette annulaire (16, 16') est formée à chacune des extrémités frontales axiales de la bride (3), collerette qui s'étend sur une partie ou sur la totalité de la partie périphérique de la bride (3) qui entoure le corps de palier (2).

13. Procédé de montage d'un palier élastomère (1) sur une barre profilée (4), de préférence une barre stabilisatrice, dans lequel
a) un corps de palier élastomère (2) est inséré dans une bride (3) servant à la fixation ultérieure du palier (1) et de la barre profilée (4),
b) le corps de palier (2) avec la bride (3) qui l'entoure est emboîté sur la barre profilée (4) via une fente d'ouverture (5) s'étendant axialement à travers le corps de palier (2) et la bride (3),
c) la fente d'ouverture (5) est refermée,
d) des languettes (6, 6') formées sur des éléments plats (8, 9) de la bride (3), qui s'étendent radialement vers l'extérieur, sont repliées deux fois, de manière telle qu'elles encerclent d'autres éléments plats (8', 9') venant se plaquer sur lesdits éléments plats (8, 9) à la manière de pinces et maintiennent ainsi la fente d'ouverture (5) fermée, et fixent le palier (1) sous précontrainte du corps élastomère sur la barre profilée (4).

14. Procédé selon la revendication 13, **caractérisé en ce qu'**avant l'insertion du corps de palier (2), la bride (3) est pourvue d'un revêtement de protection de surface.

15. Procédé selon la revendication 13 ou 14, **caractérisé en ce que** le corps de palier (2) est inséré dans la bride (3) conjointement avec une coquille en matière plastique (15) qui l'entoure.

16. Procédé selon la revendication 13, **caractérisé en ce que** le corps de palier élastomère (2) et la bride (3) sont reliés l'un à l'autre par vulcanisation avant l'emboîtement sur la barre profilée (4), et que la bride (3) est de préférence pourvue d'un revêtement de protection de surface après cette opération.

17. Procédé selon l'une des revendications 13 à 16, **caractérisé en ce que** le corps de palier (2) est fixé sur la barre profilée (4) au moyen d'une colle avant ou pendant l'emboîtement.
